# EUROPEAN PATENT APPLICATION

(11) **EP 4 530 166 A1**
(43) Date of publication of application: **02.04.2025**
(21) Application number: 23200835.9
(22) Date of filing: 29.09.2023
(51) Int. Cl.: B62D 55/075, B62D 55/253

(54) **CEILING SUSPENSION ARRANGEMENT WITH CRAWLER TYPE VEHICLES AND MODULAR STRUCTURE AND METHOD OF BUILDING THE STRUCTURE**

(71) Applicant: Ceilix AG, 82049 Pullach i. Isartal (DE)
(72) Inventor: Siedel, Michael Torsten, 53902 Bad Münstereifel (DE)
(74) Representative: Jostarndt Patentanwalts-AG

(57) **Abstract**

The invention relates to a ceiling suspension arrangement (100) exhibiting at least one crawler type ceiling unit (10) and a ceiling structure (1) extending in at least two spatial directions (x, y), the ceiling structure (1) comprising profile units (1.1) extending in a first spatial direction (x) arranged in parallel in a second spatial direction (y), the crawler type ceiling unit (10) exhibiting suspension elements (13, 13a, 13b) allowing the crawler (10) to be moved along the profile units (1.1) irrespective of momentary motion in said second spatial direction (y),
the ceiling structure (1) comprising ceiling modules (2), wherein the ceiling modules (2) comprise a subset of profile units (1.1) interconnected via connection beams (2.1).

## Description

The present invention relates to ceiling suspension arrangements exhibiting at least one crawler type ceiling unit. Further, the present invention refers to a method of building a ceiling structure. In particular, the present invention refers to devices and methods according to features of the enclosed independent and dependent claims.

### BACKGROUND OF THE INVENTION

In prior art, multiple design philosophies have already been established in context with provision of systems which shall be able to ensure a predefined position or motion also in rough terrain or in context with unpredictable reaction forces or at high inclination or in an overhead arrangement. The present invention focuses on those philosophies departing from the idea that a unit or vehicle or any means of transportation should engage / interact in predefined manner with a predefined structure at a wall or at the ceiling (e.g., overhead cranes, wall crawling robots) e.g., in a storehouse or in a machinery hall. Some ideas of provision of reliable contact between the structure and the unit have already been published in context with diagnosis and parameter measurement in nearly inaccessible areas or systems (e.g., ductwork, canal systems), including magnetic adhesion / interference. Nonetheless, there is a need for systems being capable of providing, by interacting with a predefined structure, both a predefined traveling motion and a high accuracy in positioning (positional accuracy) in very reliable manner, preferably irrespective of the kind of underground or wall constitution, wherein the predefined structure should preferably be provided in very flexible and varied manner to many kinds of areas or different kinds of wall or ceiling contour / geometry.

The skilled person may differentiate between those units or vehicles which are provided for moving on the underground and those vehicles which are provided for moving along a ceiling structure, especially since the latter have to be suspended in secure manner also, in order to avoid going down. Therefore, there might be different approaches as to the kinematics ensuring interaction/engagement at the structure's interface. The present invention focuses on interaction/engagement at/with ceiling structures.

### SUMMARY OF THE INVENTION

It is an object of the present invention to provide for a system which allows for reliable and accurate suspension/positioning/traveling of at least one ceiling unit at a ceiling structure that can be built in a time-efficient manner, especially for realizing variable two-dimensional tracks of motion of the unit. In particular, the object also includes providing for a suspension mechanism resp. suspension means allowing for securely suspending the ceiling unit. In particular, the object may also include provision of an appropriate system or concept for reliably coupling one or a plurality of ceiling units with the ceiling structure and also providing a ceiling structure that can be easily set up and can transfer loads to a supporting structure, such as a building, a machinery hall or the like.

The present invention solves this problem by providing a ceiling suspension arrangement comprising the features of independent claim A1. Advantageous embodiments of the device are derived from dependent claims A2-A15. Furthermore, the problem is solved by a method according to claim B1.

According to a first aspect, the present invention provides for a ceiling suspension arrangement exhibiting at least one crawler type ceiling unit and a ceiling structure extending in at least two spatial directions, wherein the ceiling structure comprises a plurality of profile units (especially rails) extending (preferably continuously, especially without any structural discontinuity) in a first spatial direction, wherein the ceiling structure defines at least one structural regularity in a second spatial direction (thereby providing a one-dimensional raster with discrete coupling points distributed in at least one equidistant regularity in said second spatial direction); and wherein the crawler type ceiling unit exhibits a plurality of suspension elements configured for suspending the ceiling unit and configured for coupling the crawler type ceiling unit to the ceiling structure by means of de-/coupling kinematics depending on a relative motion of the ceiling unit with respect to the ceiling structure in at least said second spatial direction, wherein the crawler type ceiling unit comprises means for providing for decoupling kinematics during a motion of the crawler type ceiling unit in said second spatial direction, especially with the crawler type ceiling unit being configured to be moved in said first spatial direction along the profile units irrespective of momentary motion in said second spatial direction, wherein the ceiling structure comprises ceiling modules, wherein the ceiling modules comprise a subset of profile units interconnected via connection beams. For example, for providing for de-/coupling kinematics during a motion of the ceiling unit in the second spatial direction, the ceiling unit exhibits at least two circumferential tracks (especially tracks based on or defined by traction means, preferably chain-based tracks), wherein the suspension elements are attached to the circumferential tracks at predefined longitudinal positions corresponding to the structural regularity, wherein the circumferential tracks respectively define a specific path of circumferential motion of the respective suspension elements (resp. of coupling means of the suspension elements, especially of a free end of the respective suspension element). Such configuration not only facilitates implementation in context with complex structures or in context with a plurality of ceiling units to be used at the same time, but also considerably increases variability as to positioning, wherein the modularity simplifies building the ceiling structure and accelerates the building process of the ceiling structure. Thereby, the present invention also provides for practical scalability (both with respect to the structure and with respect to the number of ceiling units), even in three-dimensional extension, if desired. The crawler type ceiling unit can be a crawler type ceiling vehicle, optionally exhibiting at least one motor, actuator for actively driving the crawler type ceiling unit along the structure. The crawler type vehicle can follow an intended direction resp. an intended path of motion, especially in conjunction with appropriate sensor-actor-arrangements.

The characteristic, that the suspension arrangement is configured for active motion of the vehicle / the vehicles includes all embodiments wherein the vehicle/s can move on its/their own. According to the present disclosure, "actively moving" designates a motion of the vehicle in relation to the structure actuated preferably by an electric motor of the vehicle connected to a drive unit such that the vehicle can move on its own inside the structure when the motor is activated. The choice of an appropriate motor can be carried out by the person skilled in the art in regard to existing motors and motor arrangements depending on the respective application / task / size of the respective crawler type vehicle.

According to the present disclosure, when it is referred to "ceiling structure", a structure which may also extend (at least in parts) on the ground or along a wall or on an inclined plane (or the like) can be designated. The present invention can preferably be applied for ceiling units (resp. ceiling vehicles) being arranged at resp. traveling along a ceiling structure, and in addition, the present invention also allows for any motion along any structure with alternative orientation and/or arrangement. Thus, referring to a "structure" or "ceiling structure" includes reference to any other "structure" exhibiting the features presently described allowing for coupling with/to the inventive ceiling unit and corresponding decoupling kinematics.

According to the present disclosure, when it is referred to "vehicle" or "ceiling vehicle", the disclosure also generally refers to crawler type units or vehicles and its relative spatial arrangement or traveling motion (e.g. also on the ground or on an inclined plane or at the wall).

According to the present disclosure, when it is referred to "circumferential track", the disclosure also generally refers to closed loop guidings and lines and predefined contours along which the suspension elements are guided and/or driven, e.g. chains or any such traction means providing for a closed loop.

According to the present disclosure, when it is referred to "profile units" or "profiles" or "T-profiles", the disclosure also generally refers to different kinds of profiles like e.g. I-profiles or L-profiles which may provide for advantageous/favourable arrangements in individual applications.

It should be noted that according to the invention, the crawler type ceiling unit can also be guided by a user, pulling/pushing the ceiling crawler into a specific direction. I.e., active drives are not necessarily provided. In particular, in conjunction with appropriate sensor-actor-arrangements, the crawler type ceiling unit may follow an intended direction resp. an intended path of motion (especially as a kind of semi passive guide mode; guidance via physical and/or visual interaction with an individual).

The profile units can respectively exhibit at least one tread, wherein each suspension element exhibits at least one element of motion (for gliding or rolling, especially at least one wheel) arranged and configured for at least passively moving (especially gliding or rolling) the crawler type ceiling unit in said first spatial direction.

The crawler type ceiling unit can be configured for enabling at least one closed loop trajectory of respective suspension elements along corresponding circumferential tracks, especially configured for enabling at least two closed loop trajectories of at least two subsets of respective suspension elements.

The circumferential tracks can be shaped in such a manner that the respective suspension elements are de-/coupled from/into the ceiling structure when passing a curved section of the tracks.

For example, a subset of the suspension elements can be attached to one of the circumferential tracks (resp. a subset of the first subset, momentary) and at least one further subset of the suspension elements are attached to a further one of the circumferential tracks (resp. a subset of the second subset, momentary) respectively at predefined first and second (further) longitudinal positions respectively corresponding to the structural regularity, in particular with each suspension element being guided by a pair of circumferential tracks. The suspension elements can be fixedly attached/coupled by means of a first pulley to/with a/the first circumferential track and are guided within a/the second circumferential track by means of a second pulley respectively, wherein the first and second pulley preferably are arranged at a lever arm of the respective suspension element. For example, each suspension element can exhibit a first pulley and a second pulley arranged in longitudinal distance with respect to the first pulley at a lever arm of the respective suspension element, wherein the suspension element is coupled to a/the first and a/the second circumferential tracks via the first and second pulleys.

A respective subset of said suspension elements can be connected to each other by means of longitudinal connecting elements, especially by chain elements, thereby forming a closed loop of interrelated suspension elements distanced to each other in a/the predefined structural regularity.
the respective circumferential track exhibits a chain or is provided/defined by a chain forming a closed loop of interrelated chain elements.

The crawler type ceiling unit can be configured for lifting a/the respective suspension elements out of the structure in an unloaded state, especially such that both de-/coupling kinematics for a subset of momentarily unloaded suspension elements and suspension of the crawler type ceiling unit by a subset of momentarily loaded suspension elements can be ensured.

The crawler type ceiling unit can exhibit two or more kinds/types of suspension elements, wherein the different types of suspension elements are de-/coupled according to individual kinematics (especially in opposite directions/sides at the profile units, especially both in and opposite to the second spatial direction resp. travel direction of the crawler type ceiling unit), wherein a first subset of the suspension elements are attached to a first pair of circumferential tracks (resp. a subset of the first subset, momentary) and at least one further subset of the suspension elements are attached to a second pair of circumferential tracks (resp. a subset of the second subset, momentary) respectively at predefined first and second (further) longitudinal positions respectively corresponding to the structural regularity (resp. to the distance of the profile units defined by said structural regularity), wherein the first and second pairs of circumferential tracks provide for individual kinematics for the first and second subsets of suspension elements, especially such that the crawler type ceiling unit can be secured with respect to opposite sides/directions (of the second spatial direction) at the structure resp. at the profile units.

Each suspension element can be guided by a pair of circumferential tracks, wherein the crawler type ceiling unit exhibits at least three pairs of circumferential tracks each guiding a subset of the suspension elements, wherein said de-/coupling kinematics are predefined by said three pairs of circumferential tracks in such a manner that respective suspension elements (resp. a subset of the respective subset, momentary) simultaneously de-/couple both at a first side (resp. first longitudinal position) of a respective profile unit and at a second side (resp. second longitudinal position) of a respective profile unit, especially such that the crawler type ceiling unit is secured with respect to opposite sides/directions (of the second spatial direction) at the ceiling structure, especially with all suspension elements being guided in same circumferential direction, especially with all circumferential tracks being arranged in parallel to each other.

The crawler type ceiling unit can exhibit one or more load attachment points configured for transferring loads of an external load (e.g., an object or a subject/individual to be carried/transported/moved along the ceiling in one- or two-dimensional manner) attached to the crawler type ceiling unit.

The crawler type ceiling unit can exhibit one or more hoist units, or the ceiling suspension arrangement exhibits at least two crawler type ceiling units each exhibiting at least one hoist unit, wherein the hoist unit is configured for transferring loads of an external load (e.g., an object or a subject/individual) to the ceiling structure.

The crawler type ceiling unit can exhibit at least one drive interacting with (resp. driving) at least one of the circumferential tracks, wherein the ceiling suspension arrangement is configured for a predefinable driven motion of the crawler type ceiling unit at least in said second spatial direction (especially back and forth).

The crawler type ceiling unit can exhibit an energy storage unit providing energy to a/the at least one drive of the crawler type ceiling unit, especially to a/the at least one drive interacting with (resp. driving) at least one of the circumferential tracks.

The ceiling suspension arrangement, especially the ceiling structure, can exhibit or define at least one energy charging point/position, wherein the ceiling suspension arrangement is configured for charging the at least one crawler type ceiling unit with energy when being arranged in/at said energy charging point/position.

Exemplarily, the ceiling suspension arrangement (especially the at least one crawler type ceiling unit) can exhibit a sensing device exhibiting at least one sensor from the following group: speed sensor, distance sensor, position measuring sensor, force sensor, acceleration sensor resp. gyroscope; wherein the ceiling suspension arrangement is configured for controlling the at least one crawler type ceiling unit based on (depending on) momentary measuring data of the at least one sensor.

The (respective) crawler type ceiling unit can exhibit a communicating unit configured for wireless communication at least within the ceiling suspension arrangement, wherein the (respective) crawler type ceiling unit exhibits an energy storage unit providing energy to the communicating unit, especially such that the crawler type ceiling unit is energetically self-sustaining (autarkic) for at least a period of several days or weeks or month.

The ceiling suspension arrangement can be configured for localizing individual crawler type ceiling units based on at least one locating signal transmitted by individual crawler type ceiling units (passively or actively, e.g., passively based on at least one individual transmitter, especially based on individual identification features).

For example, each suspension element can exhibit at least one element of motion (for gliding or rolling, especially at least one wheel) arranged and configured for moving (especially gliding or rolling) the crawler type ceiling unit in said first spatial direction, wherein the crawler type ceiling unit exhibits at least two drives interacting with both at least one of the circumferential tracks and with said elements of motion, wherein the ceiling suspension arrangement is configured for a predefinable two-dimensional driven motion of the crawler type ceiling unit in said spatial directions.

The profile units of the ceiling suspension arrangement can be arranged according to at least two different structural regularities (especially structural densities) respectively with respect to said second spatial direction (i.e., distributed according to at least two equidistant regularities), namely a first structural regularity defining a/the relative distance of the profile units matching with the relative (longitudinal) distance of the suspension elements attached at the tracks (with respect to each other), and a second structural regularity being a whole-number multiple of said first structural regularity (resp. of the relative longitudinal distance of the suspension elements attached at the tracks), wherein the number of momentarily engaging/coupling suspension elements preferably is at least two within a/the overlapping area of the second structural regularity, and wherein a/the area of the first structural regularity preferably has a first load-bearing capacity and the area of the second structural regularity has a second load-bearing capacity (especially smaller than the first load-bearing capacity).

The profile units of the ceiling suspension arrangement can spatially define at least two different allowable loads (according to at least two different/specific load-bearing capacities) in at least two spatial sections of the ceiling suspension arrangement along the ceiling (wherein the cross section remains identical, geometrically).

According to one embodiment, the ceiling modules are connected to a load bearing/transmitting structure, wherein a plurality of the connection beams, preferably every connection beam, comprises adapters connected to the load bearing/transmitting structure. The load bearing/transmitting structure can for example be realized via a truss structure connected a plurality of connection beams, preferably connection beams of multiple ceiling modules, thus increasing structural integrity and stiffness of the ceiling structure.

According to one embodiment, the connection beams exhibit at least one of the following:
- connection and alignment features, such as grooves or notches to accommodate profile units,
- alignment features for inter-module alignment, especially in the first spatial direction for arranging the ceiling modules a stretcher course,
- connection features for connecting to a supporting structure,
- features to integrate and position lighting elements,
- features to integrate fire extinguishing systems,
- features to integrate cables and/or pipes.
The connection and alignment features help with the building process of the ceiling modules and therefore of the ceiling structure. The alignment features for inter-module alignment, especially in the first spatial direction for arranging the ceiling modules in a stretcher course, also contribute to the speed at which the ceiling structure can be built, especially in a particularly robust form. Connection features for connecting to a supporting structure such as adapters built into to the connection beams can be used to connect to a supporting structure, such as a building, a factory hall, or the like, particularly near walls of the supporting structure. Features to integrate and position lighting elements, features to integrate fire extinguishing systems, and features to integrate cables and/or pipes are especially useful when the ceiling structure is integrated into a new building.

According to one embodiment the ends of the profile units exhibit a profiled cut to allow for smooth transition between neighboring ceiling modules, such as a step profile, a sawtooth profile, a triangle profile or a combination thereof. The first end of the profile has to match the second end of each profile unit, such that merging the two ends of two following profile units results in a particularly plane configuration such that when a crawler type ceiling unit is rolling over the cross section, the ceiling unit essentially experiences no vibration/concussion or shaking. Preferably, the ends of the profile units are beveled at an angle of 45 degrees. This is a particularly simple solution, that avoids vibrations in the transitions between the ceiling modules relatively well.

According to one embodiment the ceiling modules are arranged in a stretcher course. This increases structural stiffness of the ceiling structure.

According to one embodiment at least one ceiling module is connected to a lift structure. Here, the lift structure can be used to bring a ceiling unit currently coupled into the respective ceiling module(s) down into the sphere of action of a person to e.g., remove a ceiling unit from the ceiling structure, repair a ceiling unit, etc. The lift structure is e.g., realized via pneumatic means or an elevator rope or hoists of the known kind.

According to one embodiment the ceiling suspension arrangement comprises a further ceiling structure, wherein the profile units of the further ceiling structure extend in a further first spatial direction (x') different from the first spatial direction (x), wherein the ceiling suspension arrangement exhibits a ceiling module rotatably mounted between the ceiling structure and the further ceiling structure. Preferably, the ceiling module is able to rotate in the x-y-plane and is additionally able to tilt into the x'-y'-plane. This way, ceiling units can (be) move(d) from one ceiling structure to another, e.g., in a factory hall.

According to one embodiment the further first spatial direction (x') is at an angle between the first spatial direction (x) and the second spatial direction (y) of the first ceiling structure and the ceiling suspension arrangement exhibits a ceiling module that is rotatable inside the x-y-plane, wherein the ceiling module is mounted between the ceiling structure and the further ceiling structure. The ceiling module that is rotatable inside the same plane as the first ceiling structure is also called a *turn tile* and can be used on interfaces between two ceiling structures lying in the same plane with their profile units pointing in two different directions.

Alternatively, the further first spatial direction (x') extends at least partly in a direction (z) orthogonal to the first spatial direction (x) and the second spatial direction (y), wherein the ceiling suspension arrangement exhibits a ceiling module that is rotatable between the x-y-plane and the x'-y'-plane, wherein the ceiling module is mounted between the ceiling structure and the further ceiling structure. The (y')-direction can be parallel to the (y)-direction, i.e., the ceiling module that is rotatable between the x-y-plane and the x'-y'-plane is also called a *flip tile* because it essentially flips between the two ceiling structure orientations.

According to one embodiment the ceiling structure/s exhibit/s guardrails running along the outer edges of the ceiling structure/s. The guardrails prohibit the ceiling units from entering at least one delimitating zone or boundary line defining a limit between a traveling area for the at least one crawler type ceiling unit and an inaccessible boundary area of the ceiling structure (in which the at least one crawler type ceiling unit shall not travel or shall not be positioned). The guardrails especially prevent the ceiling units from leaving the ceiling structures at undesired edges.

According to one embodiment at least some of the guardrails have connection features that allow to connect to the connection beams. Preferably, there are four types of guardrails, that can be connected to the connection beams:
- a guardrail going parallel to the first spatial direction (x) can be connected to multiple connection beams of one or more ceiling modules, depending on the length of the guardrail,
- a guardrail going parallel to the second spatial direction (y) can be connected to one connection beam or multiple connection beams of neighboring ceiling modules,
- an outer corner guardrail,
- an inner corner guardrail, wherein the latter two comprise a combination of the connection features to connect to multiple connection beams in (x)-direction of one or more ceiling modules, depending on the length of the guardrail and to connect to one connection beam or multiple connection beams of neighboring ceiling modules in (y)-direction. This helps with the building process of the ceiling structure/s because the guardrails are easily combinable with the ceiling module.

According to one embodiment the ceiling suspension arrangement further comprises a walkway above the ceiling structure/s. The walkway can, e.g., be arranged between the load transmitting structures. This configuration is beneficial for maintenance work on the ceiling structure.

According to one embodiment additional support beams run along the outer edges of the ceiling structure/s. The additional support beams further increase the security of the ceiling structure. Preferably, the connection beams comprise means to connect to the additional support beams. However, it is also possible to connect the additional support beams to the load transmitting structures.

According to one embodiment the ceiling structure/s comprise an electrical bus, preferably connected to the power grid. The ceiling suspension arrangement can exhibit a plurality of energy supply lines extending along at least a subset of the profile units, wherein at least a subset of the suspension elements of the respective crawler type ceiling unit are configured for energy extraction via the energy supply lines, e.g., by means of current collectors or power-sliders provided at a free end (resp. at elements of motion) of the respective suspension element coupling with the profile units. Of course, the usual (electrostatic) discharge considerations have to be taken into account.

According to another aspect of the invention, a method of building a ceiling structure is provided, comprising the following steps:
- creating ceiling modules by arranging profiles units in parallel and fixing the profile units to connection beams,
- arranging the ceiling modules in a stretcher course, wherein a connection beam of a first ceiling module is preferably aligned with a connection beam of a second ceiling module, and beveled ends of a first ceiling module are aligned with beveled ends of a second ceiling module,
- merging the ceiling modules together,
- connecting the ceiling modules to a load bearing/transmitting structure,
- connecting the load bearing/transmitting structure to the supporting structure. The modular approach to create a ceiling structure greatly benefits construction time and makes the system easy to set up and integrate into already existing structures or build into buildings still under construction.

The present invention will be explained in more detail below by means of preferred examples of embodiments with reference to the accompanying figures. It should be noted, however, that the described embodiments are for illustrative purposes only and the invention is not limited thereto. A person skilled in the art will understand that various modifications, changes and variations of the present invention are possible which may differ from the illustrated embodiment. Such modifications, changes and variations are considered to be within the scope of the invention and are covered by the appended claims. One skilled in the art will be able to identify various useful combinations of the features of the present invention depending on specific requirements and circumstances.

### BRIEF DESCRIPTIONS OF THE DRAWINGS

In the accompanying drawings, multiple embodiments of a ceiling suspension arrangement are shown. From the figures shows:
- **Fig. 1**: a ceiling module in a perspective view;
- **Fig. 2a-2c**: a ceiling module in side view, with a crawler type vehicle suspended in the ceiling module;
- **Fig. 2d-2n**: details of a kinematic concept of a crawler type vehicle;
- **Fig. 3**: a ceiling module with a close-up view of one end of the ceiling module;
- **Fig. 4a-4b**: a ceiling module and a simplified representation of the ceiling module;
- **Fig. 5a**: two ceiling modules aligned with each other, with a close-up view,
- **Fig. 5b**: the two ceiling modules connected to each other, with a close-up view,
- **Fig. 6a**: three ceiling modules aligned to each other, with a close-up view,
- **Fig. 6b**: three ceiling modules connected to each other, with a close-up view,
- **Fig. 7a**: a plurality of ceiling modules arranged in a stretcher course,
- **Fig. 7b**: the plurality of ceiling modules connected to each other to form a ceiling structure,
- **Fig. 7c**: the ceiling structure connected to a load bearing/transmitting structure,
- **Fig. 8**: a ceiling suspension arrangement according to one embodiment,
- **Fig. 9**: a ceiling suspension arrangement with a lift structure in a first position,
- **Fig. 10**: the ceiling suspension arrangement with the lift structure in a second position,
- **Fig. 11a**: a first ceiling structure and a second ceiling structure with a different orientation, and a rotatably mounted ceiling module in a first orientation,
- **Fig. 11b**: the first ceiling structure and the second ceiling structure, and the rotatably mounted ceiling module in a second orientation,
- **Fig. 12a**: a first ceiling structure and a second ceiling structure with a different orientation, and a rotatably mounted ceiling module in a first orientation,
- **Fig. 12b**: the first ceiling structure and the second ceiling structure, and the rotatably mounted ceiling module in a second orientation,
- **Fig. 13a**: a first ceiling structure and a second ceiling structure with a different orientation, and a rotatably mounted ceiling module in a first orientation, and
- **Fig. 13b**: the first ceiling structure and the second ceiling structure, and the rotatably mounted ceiling module in a second orientation.

### DETAILED DESCRIPTION OF THE DRAWINGS

The invention will now be described first in general for the inventive concept with reference to all drawings, before the drawings are described in detail.

The crawler type vehicles can exhibit at least one first drive unit 11 which may provide for accommodation of a crawling or driving mechanism with motor(s), which allows for circumferential motion of suspension elements 13 along circumferential tracks 12, namely simultaneously along a first and a second circumferential track 12a, 12b, which tracks exhibit individual shapes/contours XZa, XZb. Preferably, the tracks only extend two-dimensionally (2D), i.e., in a plane, and the shape is different at least in curved sections 12r of the tracks. Each track 12a, 12b exhibits a parallel/linear section 12p (resp. two parallel sections) and at least one redirection/curved section 12r (resp. two curved sections). A lateral area resp. surface shell of the at one chassis or housing is preferably flat, plane, even, respectively on each lateral side. Such a configuration is favorable in view of interconnection of several housings 17 (side by side).

The crawler type vehicle 10 exhibits at least one further housing 17 (preferably in the same drive unit 11) exhibiting first and second circumferential tracks 12a, 12b and accommodating a plurality of further suspension elements 13b which are arranged mirror-inverted, with respect to the suspension elements 13 of the first housing 17. Both types of suspension elements 13, 13b can be arranged within the same drive unit 11, and optionally, both types of suspension elements 13, 13b can be guided by the same pair of circumferential tracks 12a, 12b. The drive unit 11 may actively provide for a traveling motion (e.g., by a synchronous guiding/driving motion of/to the suspension elements 13, 13b). Several first drive units 11a, 11b, 11c can be interconnected, e.g., via cross-beams or the like. The desired/required traveling motion can be controlled via a control unit which can be coupled to at least one motor. A drive section may also comprise at least one gear unit configured for interacting with the track(s) and at least one energy storage unit. A sensor arrangement exhibiting at least one sensing device, e.g., comprising position sensors and velocity sensors and/or weight sensors and/or gyroscopes, may provide sensor data to the control unit.

Preferably, each suspension element 13, 13a, 13b exhibits a first pulley 13.1 and a second pulley 13.2, and optionally, at least one wheel 13.3 is provided at the free end of the suspension element 13 (bearing point/coupling point P13). The first and second pulleys are arranged on a lever arm 13.5 in distance from/to each other (y-offset, longitudinal extension y13 of lever arm); the bearing point P13 resp. the wheel 13.3 is arranged at a protruding section resp. suspension arm 13.6 (z-offset). At the free end of the suspension arm, optionally, a current collector resp. power-slider 13.4 (conductive slider for energy transfer) is provided in an arrangement geometrically corresponding to a/the power rail 1.3 of the respective profile units 1.1. The plurality of suspension elements 13 of a/the respective first drive unit 11 can be interconnected via longitudinal connecting elements 15 which can ensure a closed loop 15a of interrelated suspension elements. The suspension elements 13 are coupled to the respective circumferential tracks.

In other words: The suspension elements preferably exhibit at least one wheel 13.3 performing a rolling motion on the profile units 1.1, preferably on the wheel tread 1.2 and preferably additionally on the side of the profile units, of the structure 1, allowing for a motion which is orthogonal to the motion predefined and evoked by the tracks 12, wherein the wheel 13.3 is positioned and aligned orthogonally with respect to the first and second pulleys 13.1, 13.2. Optionally, the wheel can be motorized e.g., by means of further actuators or motors. The first pulley 13.1 is engaged with the first or second circumferential track, thereby following the contour defined by said track; also, the second pulley 13.2 is engaged with the first or second circumferential track, thereby following said track (which is different from the track engaged by the first pulley, i.e., vice versa). The lever arm 13.5 is preferably L-shaped, especially provided as integral element in one piece (massive, solid).

The structure 1 and its raster 1a is defined by profile units 1.1 being arranged in parallel and with similar distance (pitch) to adjacent profile units. Each profile unit is preferably configured to support geometries/surface(s) which are adequate for interaction with the wheel(s) of the suspension elements (e.g. T-profile, C-profile, L-profile, I-profile), and a series of such profile units preferably provides for a planar surface or for a tubular surface at least in sections.

By means of the circumferential tracks 12a, 12b and the suspension elements 13, the (respective) first drive units 11, and the kinematics defined by the shape of the tracks provide for de-/coupling kinematics 20 which ensure both horizontal/vertical motion kinematics and non-circular pivot motion kinematics. Thereby, de-/coupling of each suspension element can be affected via circumferential motion along the tracks without the need of any axial telescopic motion within each suspension element, i.e., the respective suspension element can be designed as purely mechanic unit.

In the following, the kinematics provided by the guiding/driving motion along circumferential tracks is described in general, first:
The first pulley 13.1 of each suspension element 13 rotates about a first pulley axis and defines a first guiding point G13.1 (coupling the first track and the respective suspension element), and vice versa, the corresponding point of the corresponding circumferential track defines that first guiding point G13.1 for each suspension element. Likewise, the second pulley 13.2 of each suspension element 13 rotates about a second pulley axis (which is preferably aligned in parallel) and defines a second guiding point G13.2 (coupling the second track and the respective suspension element). When referring to the kinematics of each suspension element, an instantaneous center of rotation of each suspension element is defined by the axis of the first pulley 13.1 being coupled to the first track 12a, wherein coupling/attachment/fixation can be ensured e.g. at the axial section between a/the suspension arm 13.6 and the first pulley 13.1. The two tracks 12a, 12b are arranged with respect to another in such a manner that the contacting/bearing point/area P13 (coupling point) of the respective suspension element 13 can be hooked or hitched in the structure. The wheel 13.3 of each suspension element rotates about a wheel axis which is preferably aligned orthogonally to the first and second pulley axis. Since each suspension element 13 is coupled to the tracks 12a, 12b in predefined positions, namely in a predefined first longitudinal position y12a via the first pulley 13.1 and in a predefined second longitudinal position y12b via the second pulley 13.2, when driving the tracks resp. when guiding the suspension elements along the tracks, the bearing point P13 at the free end of the suspension element 13 is guided according to the relative position/contour and distance of the corresponding tracks (of a pair of tracks guiding the respective suspension element).

The crawler type vehicle 10 may exhibit a control unit which can be a decentral (individual) control unit. Further, a respective crawler type vehicle 10 may exhibit a communicating unit (e.g., near field, mobile network, LAN, LP-WAN, SigFox, NBIoT) and/or a transmitter (active or passive), especially for transmitting locating signals. These components are configured to interact in/with a positioning system or route-planning tool.

The crawler type vehicle 10 can be configured to carry a load, which can be attached to the crawler type vehicle 10 at a connecting point. The load may comprise an identification feature, especially a code (e.g., including a number). Likewise, each crawler type vehicle 10 may comprise an identification feature, especially a code (e.g., including a number).

A digital twin referring to a respective crawler type vehicle 10 and/or a digital twin referring to a respective load can be stored in a database of a route-planning tool. The database is configured for storing and accessing the at least one digital twin at least comprising information of momentary status, wherein the suspension arrangement is configured to define at least one control parameter for individual crawler type vehicles based on information of the at least one digital twin.

In the figures, (x) designates a/the first spatial direction (especially cross direction, especially direction of longitudinal extension of profile units), and (y) designates a/the second spatial direction (especially longitudinal direction or momentary driving direction of the crawler type vehicle), and (z) designates a/the third spatial direction.

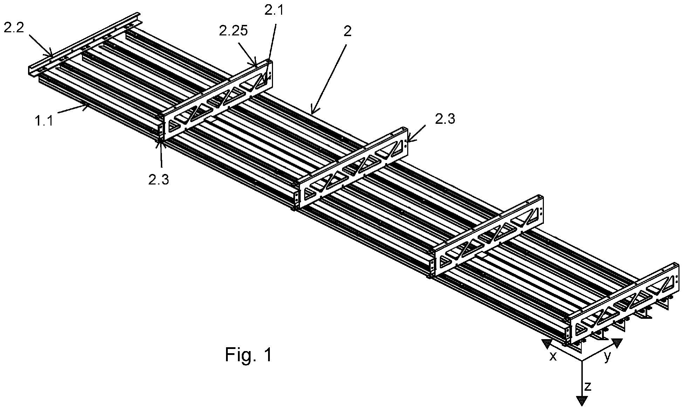

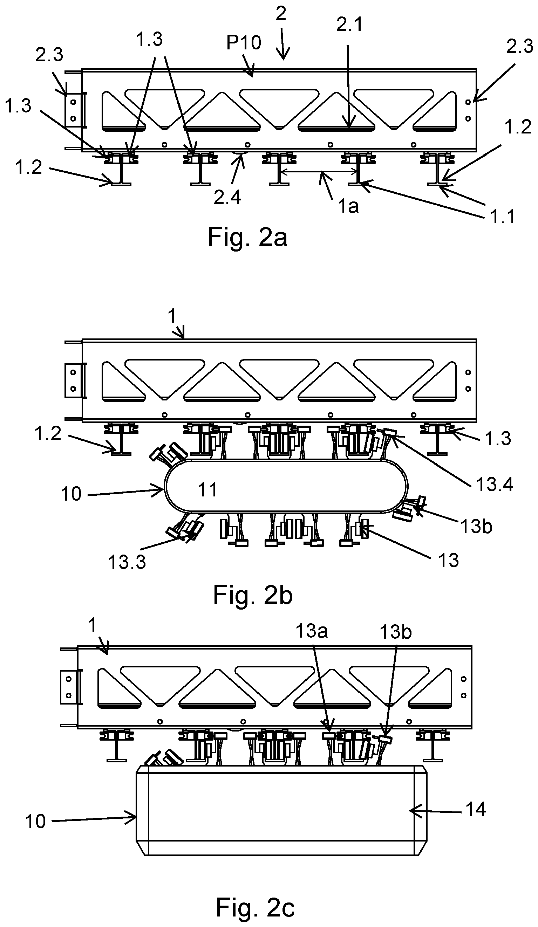

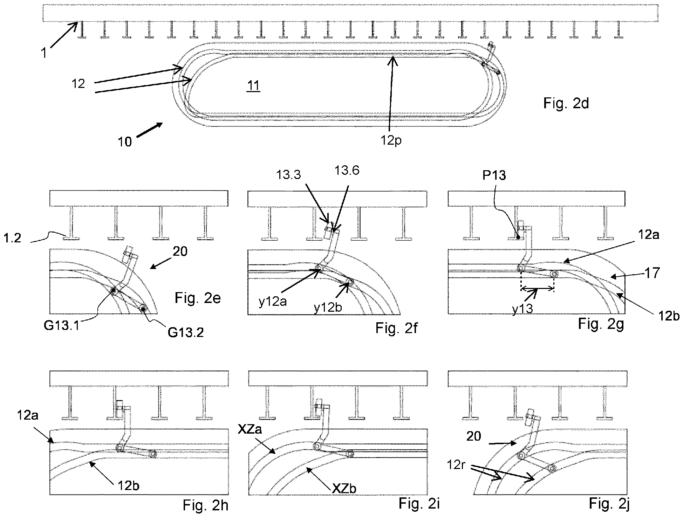

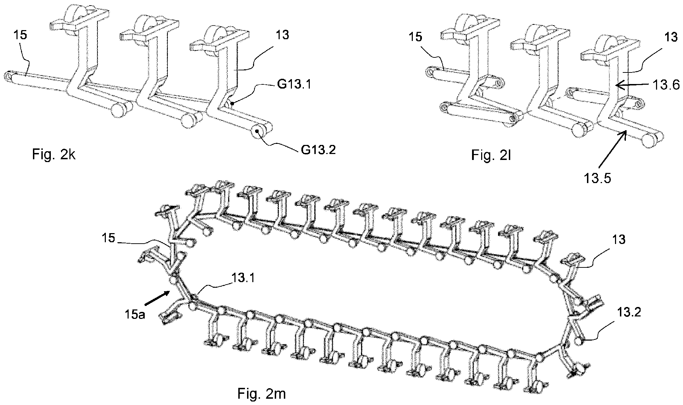

In **Fig. 1****,** a ceiling module 2 is shown in a perspective view from above. The ceiling module 2 comprises five profile units 1.1, connected via connection beams 2.1. The connection beams 2.1 comprise adapters 2.2 to connect to neighboring (next in line, in first spatial direction (x)) ceiling modules 2 and adapters 2.25 to connect to a load bearing/transmitting structure 2.5. Additionally, the ceiling modules comprise adapters 2.3 to connect to neighboring ceiling modules 2 in second spatial direction (y). The same ceiling module 2 is depicted in **Fig. 2a** in a side view. The profile units 1.1 are T-shaped and exhibit rails 1.3 for electrical connection with a crawler type ceiling unit not shown here, i.e., this ceiling module 2 can be part of a energy charging point/area P10 in the structure 1. Further, a light source 2.4 is recessed between the middle profile unit 1.1 and the profile unit 1.1 to its left. The connection beam 2.1 exhibits adapters 2.3 for a plug connection with a neighboring (adjacent line, in second spatial direction (y)) ceiling module. The adapters 2.3 for the plug connection of adjacent ceiling modules 2 can be screwed together after they are inserted into each other.

In **Fig. 2b****,** a crawler type ceiling unit 10 is shown in a side view suspended in the ceiling structure 1. The crawler type ceiling unit 10 can e.g., be guided by a user pulling/pushing the ceiling crawler (the ceiling unit) 10 into a specific direction. But, in conjunction with appropriate sensor-actor-arrangements, not shown here, the crawler type ceiling unit 10 may follow an intended direction resp. an intended path of motion (especially as a kind of semi passive guide mode; guidance via physical and/or visual interaction with an individual). The profile units 1.1 respectively exhibit treads 1.2, wherein suspension elements 13, 13b exhibit a wheel 13.3 for gliding or rolling, arranged and configured for at least passively moving (especially gliding or rolling) the crawler type ceiling unit in the first spatial direction. The crawler type ceiling unit 10 enables two closed loop trajectories of at least two subsets of respective suspension elements, as can be seen in **Fig. 2d****-j.** The circumferential tracks 12a, 12b are shaped in such a manner that the respective suspension elements 13, 13b are de-/coupled from/into the ceiling structure 1 when passing a curved section 12r of the tracks 12. One subset of the suspension elements 13 is attached to one of the circumferential tracks (resp. a subset of the first subset, momentary) and one further subset of the suspension elements 13b are attached to a further one of the circumferential tracks (resp. a subset of the second subset, momentary) respectively at predefined first and second (further) longitudinal positions respectively corresponding to the structural regularity, with each suspension element being guided by a pair of circumferential tracks. The suspension elements 13, 13b are fixedly attached/coupled by means of a first pulley 13.1 to/with a/the first circumferential track 12a and are guided within a/the second circumferential track 12b by means of a second pulley 13.2 respectively, wherein the first pulley 13.1 and the second pulley 13.2 are arranged at a lever arm 13.5 of the respective suspension element 13, 13b. A respective subset of said suspension elements 13 is connected to each other by means of longitudinal connecting elements 15 (chain elements) forming a closed loop of interrelated suspension elements 15a distanced to each other in the predefined structural regularity (1a), as can be seen in **Fig. 2k****-m.** The crawler type ceiling unit 10 in **Fig. 2b** exhibits two kinds/types of suspension elements 13, 13b, wherein the different types of suspension elements 13, 13b are de-/coupled according to individual kinematics (here, in opposite directions/sides at the profile units 1.1, both in and opposite to the second spatial direction resp. travel direction of the crawler type ceiling unit 10), wherein a first subset of the suspension elements 13 are attached to a first pair of circumferential tracks 12a, 12b (resp. a subset of the first subset, momentary) and at least one further subset of the suspension elements 13b are attached to a second pair of circumferential tracks 12a, 12b (resp. a subset of the second subset, momentary) respectively at predefined first and second (further) longitudinal positions respectively corresponding to the structural regularity 1a (resp. to the distance of the profile units defined by said structural regularity), wherein the first and second pairs of circumferential tracks 12a, 12b provide for individual kinematics for the first and second subsets of suspension elements 13, 13b, especially such that the crawler type ceiling unit 10 can be secured with respect to opposite sides/directions (of the second spatial direction) at the structure 1 resp. at the profile units 1.1.

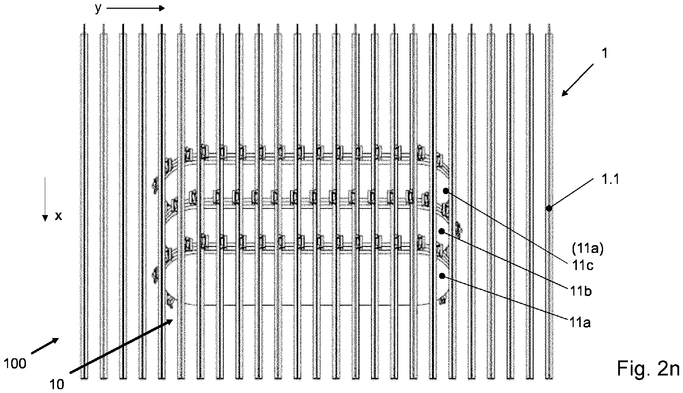

In **Fig. 2n****,** each suspension element 13, 13b is guided by a pair of circumferential tracks 12a, 12b, wherein the crawler type ceiling unit 10 exhibits at least three pairs of circumferential tracks 12a, 12b (e.g., engraved in a respective housing 17 of the respective drive unit 11a, 11b, 11c) each guiding a subset of the suspension elements 13, 13b, wherein said de-/coupling kinematics are predefined by said three pairs of circumferential tracks 12a, 12b in such a manner that respective suspension elements 13, 13b (resp. a subset of the respective subset, momentary) simultaneously de-/couple both at a first side (resp. first longitudinal position) of a respective profile unit 1.1 and at a second side (resp. second longitudinal position) of a respective profile unit 1.1, especially such that the crawler type ceiling unit 10 is secured with respect to opposite sides/directions (of the second spatial direction) at the ceiling structure 1 with all suspension elements 13 being guided in same circumferential direction with all circumferential tracks 12a, 12b being arranged in parallel to each other. The crawler type ceiling unit 10 exhibits at least one motor (not shown here) interacting with at least one of the drive units 11a, 11b, 11c. The crawler type ceiling unit 10 also exhibits an energy storage unit (also not depicted) providing energy to a/the at least one motor of the crawler type ceiling unit 10. As can be seen in **Fig. 2b****,** the exemplary crawler type ceiling unit 10 exhibits electrical contacts 13.4 to connect to an electrical bus 1.3 in the ceiling structure 1. The electrical bus 1.3 can be a power line (AC or DC) as well as a communication bus or a combination thereof, such as e.g., a DC supply and a TWI (two wire interface), powerline communication or power-over-ethernet. To improve safety and electromagnetic shielding of the crawler type ceiling unit 10, the crawler type ceiling unit 10 in **Fig. 2c** exhibits a protective casing 14.

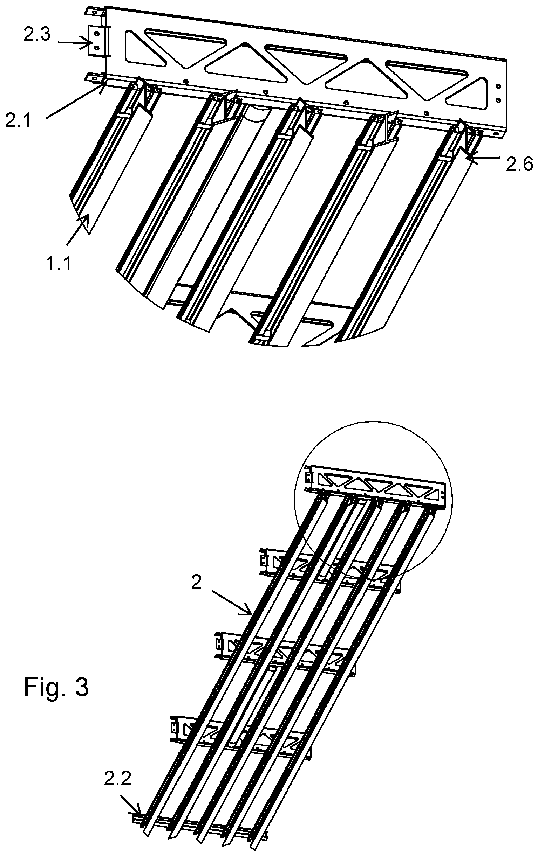

**Fig. 3** shows the ceiling module 2 in a perspective view from below. The section circled in the figure is shown in enlarged view as a close-up view of one end of the ceiling module 2. From this view, it can be seen that the ends 2.6 of the profile units 1.1 of the ceiling module 2 are beveled at an angle of 45 degrees, wherein the orientation of two adjacent profile units 1.1 is alternating. Here, the light source 2.4 is shown as a fluorescent tube.

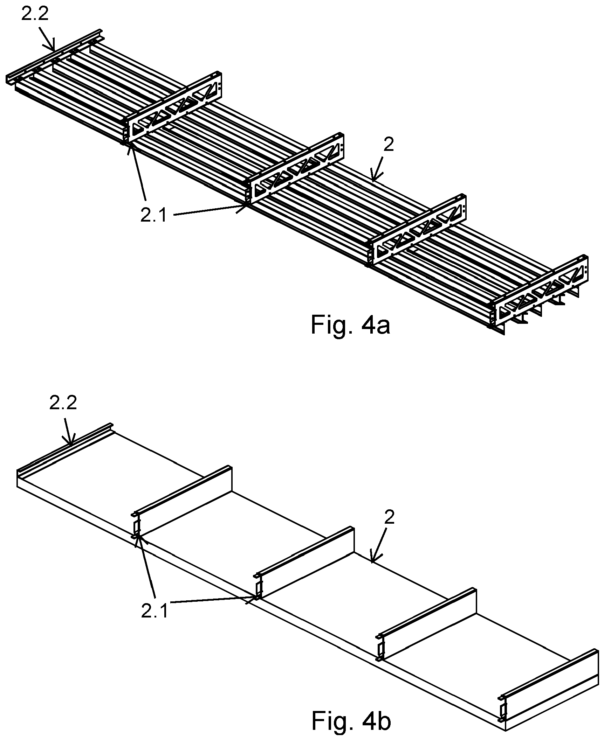

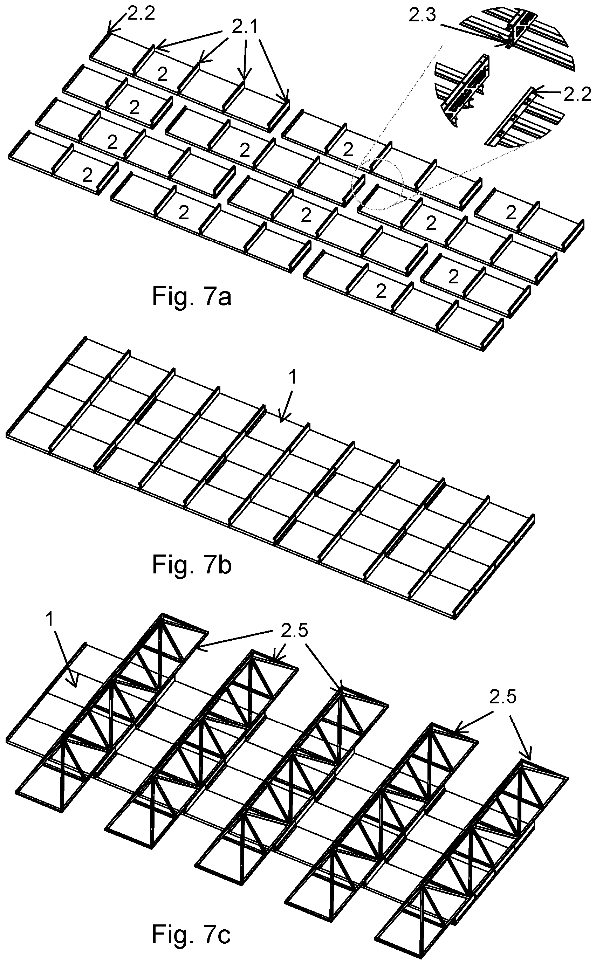

**Fig. 4a** shows the ceiling module 2 from Fig. 1, while **Fig. 4b** shows an oversimplified sketch of the ceiling module 2. In Figures 7a to 12b, the simplified sketch of the ceiling module 2 is used for better illustration due to the larger number of ceiling modules 2 used to form a ceiling structure 1.

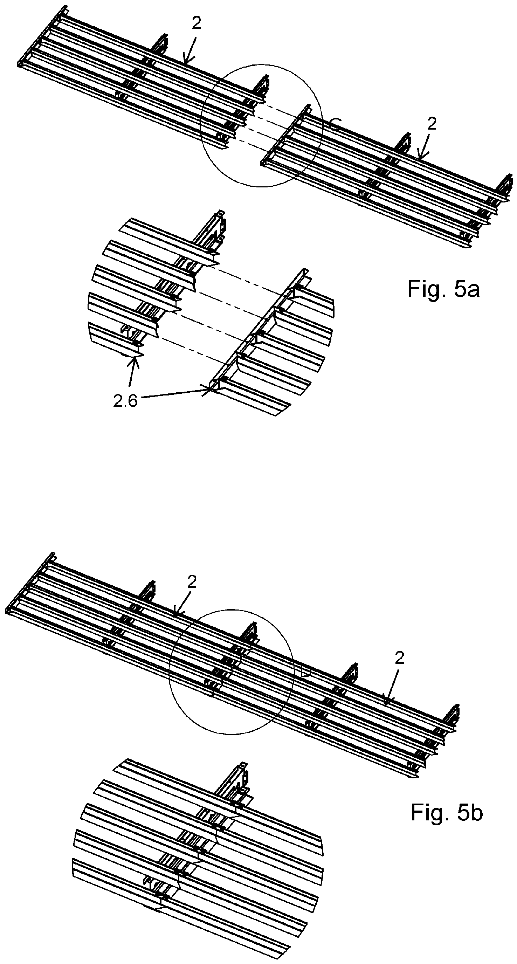

**Fig. 5a** shows two ceiling modules 2 aligned with each other in first spatial direction (x). The ends 2.6 of the first ceiling module 2 and the second ceiling module 2 are beveled accordingly such that when the ceiling modules 2 are held together, they form a smooth transition. This state is shown in **Fig. 5b****.** A crawler type ceiling unit 10 rolling in its first spatial direction along the profile units 1.1 (profile rails) does not experience any ripple when passing the transition between the two ceiling modules.

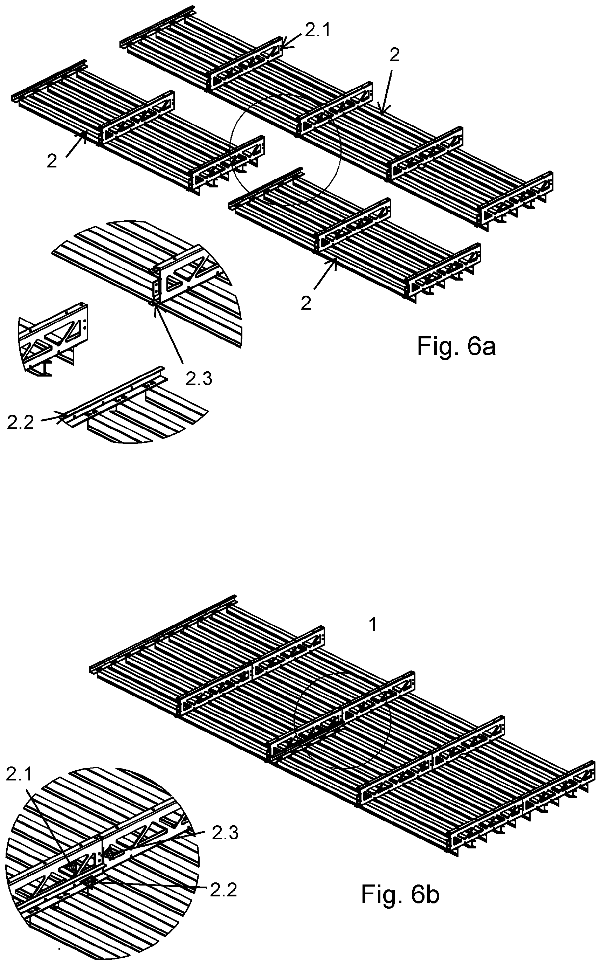

In **Fig. 6a****,** three ceiling modules 2 are aligned to each other before assembly. Two ceiling modules 2 have the same length, while the third ceiling module is twice as long. When assembling the ceiling structure 1, first, the ceiling modules 2 in one line (in first spatial direction (x)) are connected (e.g., screwed together via adapter 2.2), before the line is connected to the adjacent line via the adapters 2.3 for the plug connection. **Fig. 6b** shows the three ceiling modules 2 connected to each other forming a ceiling structure 1, with a close-up view of the connection. The adapters 2.2, 2.3 are connected to the connection beam 2.1 (to the adapters 2.2, 2.3 of the connection beam 2.1 respectively).

In **Fig. 7a** to **Fig. 7c** the building process of a larger ceiling structure 1 is shown. First, as shown in **Fig. 7a****,** a large number of ceiling modules 2 is arranged in a stretcher course. The ceiling modules 2 here comprise four connection beams 2.1 and a fifth end connection beam (adapter 2.2) to connect to the next ceiling module 2 in the same line. In **Fig. 7b****,** the plurality of ceiling modules 2 are connected to each other to form a ceiling structure 1. In the next step, as shown in **Fig. 7c****,** the connection beams 2.1 are additionally connected to a load bearing/transmitting structure 2.5 via adapters 2.25 (Fig. 1). Here, the load bearing/transmitting structure 2.5 is a truss structure.

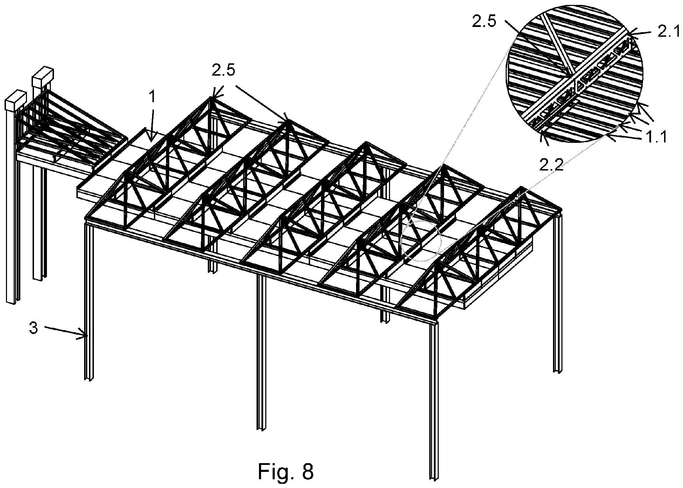

Afterwards, the ceiling structure 1 is connected to a supporting structure 3, as shown in **Fig. 8****.** The supporting structure 3 can also be integrated into walls of a building, a factory hall or the like. A portion of the ceiling structure 1 is shown in a close-up view to show details of the connection between the load bearing/transmitting structure 2.5 and three ceiling modules 2 similar to the connection shown in Fig. 6b.

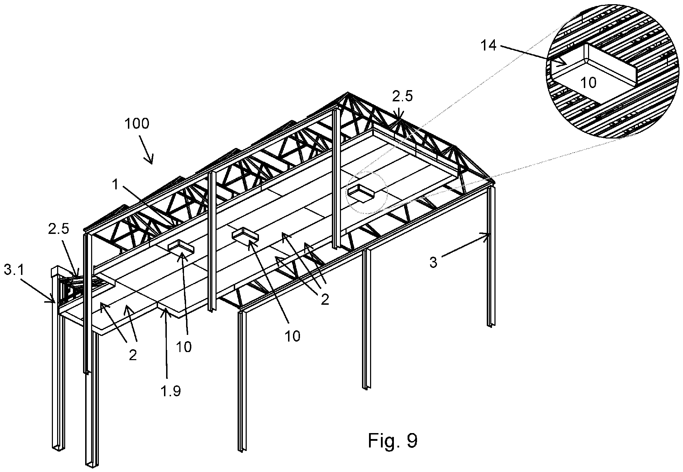

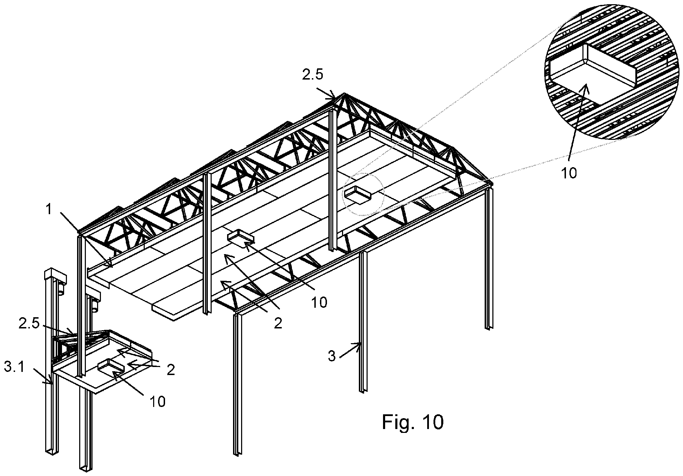

**Fig. 9** shows a ceiling suspension arrangement 100 with a lift structure 3.1 in a first position in a perspective view from below. The ceiling suspension arrangement 100 consists of a ceiling structure 1 and crawler type ceiling units 10 suspended in the structure 1. The structure is surrounded by a guardrail 1.9. The crawler type ceiling units 10 are for example, of the type discussed in Fig. 2a-2n, wherein the crawler type ceiling units 10 additionally exhibit a protective casing 14. The ceiling structure 1 consists of multiple ceiling modules 2, wherein two ceiling modules 2 are connected to a lift structure 3.1. The ceiling modules 2 of the lift structure 1 are connected to their own load bearing/transmitting structure 2.5 connected to the lift structure 1. For example for maintenance purposes, a crawler type ceiling unit 10 suspended in the ceiling structure 1 can drive to the ceiling modules 2 of the lift structure 3.1. Afterwards, the lift structure 3.1 then moves down out of the (x,y) plane defined by the ceiling structure 1 (in third spatial direction (z)), as shown in **Fig. 10****.** After maintenance, the crawler 10 is driven upwards via the lift 3.1 and can perform a variety of tasks for example, in coordination with the other crawler type ceiling units 10 in the ceiling structure 1.

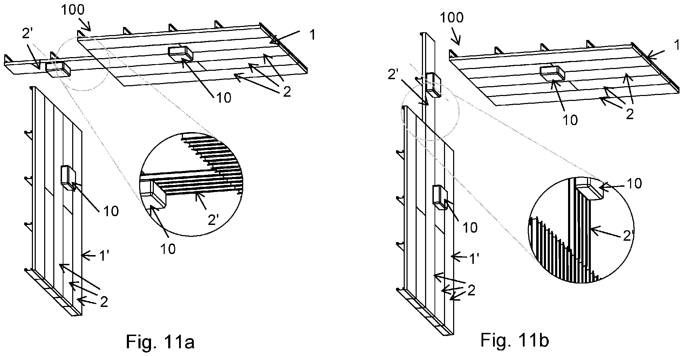

In **Fig. 11a****,** a ceiling suspension arrangement 100 with a first ceiling structure 1 and a second ceiling structure 1' with a different orientation than the first ceiling structure 1, and a rotatably mounted ceiling module 2' in a first orientation is shown. The ceiling structure 1' can be mounted on a wall (instead of the roof) as shown here, without departing from the inventive concept. It is however preferred that the crawler type ceiling units 10 have some type of active drive with a braking function in the case that a ceiling structure 1 is not parallel to the ground to avoid falling out of the ceiling structure 1'. One crawler type ceiling unit 10 changes from the first ceiling structure 1 to the second ceiling structure X. For this, the crawler type ceiling unit 10 drives onto the rotatably mounted ceiling module 2' (flip tile), while the ceiling module 2 is oriented to be in the plane of the first ceiling structure 1. Then, in **Fig. 11b****,** the rotatably mounted ceiling module 2 is flipped in a second orientation, lying in the plane of the second ceiling structure 1'. The crawler type ceiling unit 10 can then proceed with its tasks in the second ceiling structure 1'.

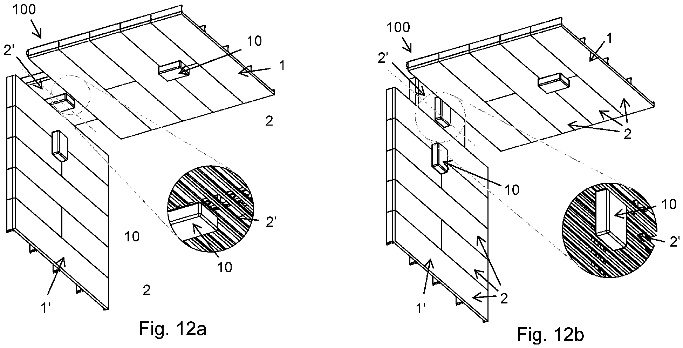

In **Fig. 12a****,** another ceiling suspension arrangement 100 with a first ceiling structure 1 and a second ceiling structure 1' with a different orientation, and a rotatably mounted ceiling module 2' in a first orientation, is shown. Here, the first spatial direction (x) of the first ceiling structure 1 is parallel to the first spatial direction (x') of the second ceiling structure 1', while the planes in which the ceiling structures 1, 1' extend are orthogonal to each other in this case. A crawler type ceiling unit 10 can change between the two ceiling structures 1, 1' in the same manner as in Fig. 11a and 11b. In **Fig. 12b****,** the crawler type ceiling unit 10 can proceed with its tasks in the second ceiling structure 1'.

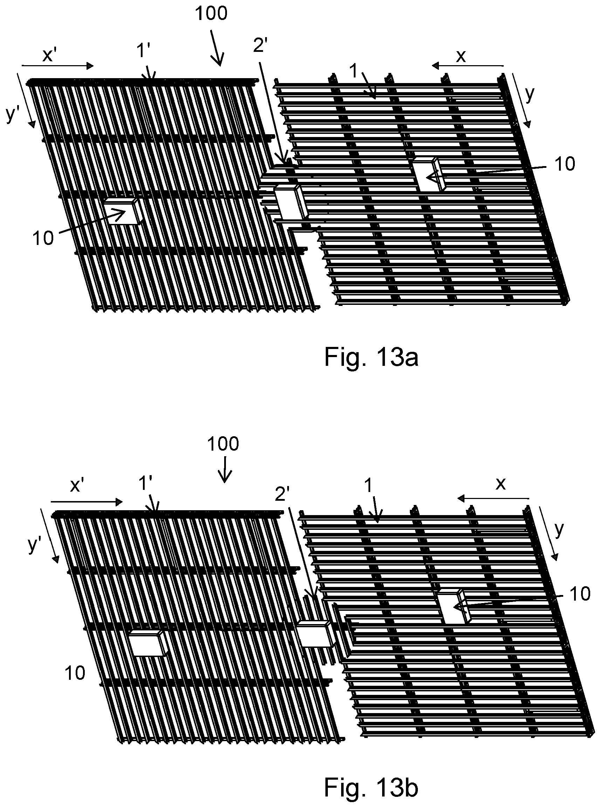

Another ceiling suspension arrangement 100 is shown in **Fig. 13a** with a first ceiling structure 1 and a second ceiling structure 1', wherein the ceiling structures 1, 1' lie in the same plane but have different spatial directions (x, x', y,y'), and a rotatably mounted ceiling module 2' (turn tile) in a first orientation is placed between the two ceiling structures 1, 1'. The rotatably mounted ceiling module 2 in this case exhibits a circular shape in order to fit between the two ceiling structures 1, 1'. A crawler type ceiling unit 10 changing from the first ceiling structure 1 to the second ceiling structure 1' is suspended on the rotatably mounted ceiling module 2'. Then, in **Fig. 13b****,** the rotatably mounted ceiling module 2' is rotated in a second orientation such that the first spatial direction of the rotatably mounted ceiling module 2' is the same as the first spatial direction (x') of the second ceiling structure 1'.

The embodiments shown here are merely examples of the present invention and should not be construed as limiting. Alternative embodiments considered by those skilled in the art are equally encompassed within the scope of the present invention.

### List of reference signs

- 1: ceiling structure
- 1': second (ceiling) structure
- 1a: structural regularity or raster defined by the ceiling structure
- 1.1: profile unit, especially T-profile resp. T-rail
- 1.2: wheel tread
- 1.3: electrical bus, especially power rail
- 1.9: guard rail
- 2: ceiling module
- 2': rotatable ceiling modules
- 2.1: connection beam
- 2.2: adapter, especially for connecting to a ceiling module in first spatial direction
- 2.25: adapter, especially for connecting to a load bearing/transmitting structure
- 2.3: adapter, especially for connecting to a ceiling module in second spatial direction
- 2.4: light source
- 2.5: load bearing/transmitting structure
- 2.6: end of a profile unit of a ceiling module
- 3: supporting structure
- 3.1: lift structure
- 10: crawler type ceiling unit
- 11: drive unit (motor, actuator), especially chain drive
- 11a: first drive
- 11b: further (second) drive
- 11c: further (third) drive
- 12: circumferential track
- 12a: first circumferential track, especially comprising a chain
- 12b: second circumferential track
- 12p: parallel section / linear section of the track
- 12r: redirection section / curved section of the track
- 13: suspension element resp. chain element
- 13a: first suspension element resp. chain element (first type)
- 13b: further suspension element (second type, especially mirror-inverted)
- 13.1: first pulley
- 13.2: second pulley
- 13.3: wheel
- 13.4: electrical contact, especially current collector resp. power-slider (conductive slider for energy transfer)
- 13.5: lever arm
- 13.6: protruding section / suspension arm
- 14: casing
- 15: longitudinal connecting element, especially chain element
- 15a: closed loop of interrelated suspension elements, especially chain
- 17: housing or chassis
- 20: de-/coupling kinematics
- 100: ceiling suspension arrangement
- G13.1: first guiding point or axis (coupling the first track and the suspension element)
- G13.2: second guiding point or axis (coupling the second track and the suspension element)
- P10: energy charging point/position
- P13: contacting/bearing point/area of the suspension element with the ceiling structure
- XZa: shape/contour of the first circumferential track
- XZb: shape/contour of the second circumferential track
- y12a: predefined first longitudinal positions
- y12b: predefined second longitudinal positions
- y13: longitudinal extension of lever arm
- x: first spatial direction: direction of longitudinal extension of profile units
- y: second spatial direction: longitudinal direction resp. alignment of the circumferential tracks
- z: third spatial direction, especially vertical direction

## Claims

1. Ceiling suspension arrangement (100) exhibiting at least one crawler type ceiling unit (10) and a ceiling structure (1) extending in at least two spatial directions (x, y), wherein the ceiling structure (1) comprises a plurality of profile units (1.1) extending in a first spatial direction (x), wherein the ceiling structure (1) defines at least one structural regularity (1a) in a second spatial direction (y), wherein the crawler type ceiling unit (10) exhibits a plurality of suspension elements (13, 13a, 13b) configured for suspending the crawler type ceiling unit (10) and configured for coupling the crawler type ceiling unit (10) to the ceiling structure (1) by means of de-/coupling kinematics depending on a relative motion of the crawler type ceiling unit (10) with respect to the ceiling structure (1) in at least said second spatial direction (y), wherein the crawler type ceiling unit (10) comprises means for providing for decoupling kinematics during a motion of the crawler type ceiling unit (10) in said second spatial direction (y), especially with the crawler type ceiling unit (10) being configured to be moved in said first spatial direction (x) along the profile units (1.1) irrespective of momentary motion in said second spatial direction (y),
wherein the ceiling structure (1) comprises ceiling modules (2), wherein the ceiling modules (2) comprise a subset of profile units (1.1) interconnected via connection beams (2.1).

2. Ceiling suspension arrangement (100) according to claim 1, wherein the ceiling modules (2) are connected to a load bearing/transmitting structure (2.5), wherein a plurality of the connection beams (2.1), preferably every connection beam (2.1), comprises adapters (2.25) connected to the load bearing/transmitting structure (2.5).

3. Ceiling suspension arrangement (100) according to any of the preceding claims, wherein the connection beams (2.1) exhibit at least one of the following:
- connection and alignment features, such as grooves or notches to accommodate profile units (1.1),
- alignment features for inter-module alignment, especially adapters (2.2, 2.3) for arranging the ceiling modules (2) a stretcher course, especially in first and second spatial direction
- connection features for connecting to a supporting structure (3),
- features to integrate and position lighting elements (2.4),
- features to integrate fire extinguishing systems,
- features to integrate cables and/or pipes.

4. Ceiling suspension arrangement (100) according to any of the preceding claims, wherein the ends (2.6) of the profile units (1.1) exhibit a profiled cut to allow for smooth transition between neighboring ceiling modules (2), such as a step profile, a sawtooth profile, a triangle profile or a combination thereof.

5. Ceiling suspension arrangement (100) according to claim 3, wherein the ends (2.6) of the profile units (1.1) are beveled at an angle of 45 degrees.

6. Ceiling suspension arrangement (100) according to any of the preceding claims, wherein the ceiling modules (2) are arranged in a stretcher course.

7. Ceiling suspension arrangement (100) according to any of the preceding claims, wherein at least one ceiling module (2) is connected to a lift structure (3.1).

8. Ceiling suspension arrangement (100) according to any of the preceding claims, further comprising a further ceiling structure (1'), wherein the profile units (1.1) of the further ceiling structure (1') extend in a further first spatial direction (x') different from the first spatial direction (x), wherein the ceiling suspension arrangement (100) exhibits a ceiling module (2') rotatably mounted between the ceiling structure (1) and the further ceiling structure (1').

9. Ceiling suspension arrangement (100) according to the preceding claim, wherein the further first spatial direction (x') is at an angle between the first spatial direction (x) and the second spatial direction (y) of the first ceiling structure (1) and the ceiling suspension arrangement (100) exhibits a ceiling module (2') that is rotatable inside the x-y-plane, wherein the ceiling module (2') is mounted between the ceiling structure (1) and the further ceiling structure (1').

10. Ceiling suspension arrangement (100) according to claim 8, wherein the further first spatial direction (x') extends at least partly in a direction (z) orthogonal to the first spatial direction (x) and the second spatial direction (y), wherein the ceiling suspension arrangement (100) exhibits a ceiling module (2') that is rotatable between the x-y-plane and the x'-y'-plane, wherein the ceiling module (2') is mounted between the ceiling structure (1) and the further ceiling structure (1').

11. Ceiling suspension arrangement (100) according to any of the preceding claims, wherein the ceiling structure/s (1, 1') exhibit/s guardrails (1.9) running along the outer edges of the ceiling structure/s (1, 1').

12. Ceiling suspension arrangement (100) according to any of the preceding claims, further comprising a walkway above the ceiling structure/s (1, 1').

13. Ceiling suspension arrangement (100) according to any of the preceding claims, wherein additional support beams run along the outer edges of the ceiling structure/s (1, 1').

14. Ceiling suspension arrangement (100) according to any of the preceding claims, wherein the ceiling structure/s (1, 1') comprise an electrical bus (1.3), preferably power lines.

15. Method of building a ceiling structure (1), especially a ceiling structure (1) for a ceiling suspension arrangement (100) according to one of claim 1 to 14, comprising the following steps:
- creating ceiling modules (2) by arranging profile units (1.1) in parallel with a fixed distance corresponding to the regularity 1a and fixing the profile units (1.1) to connection beams (2.1),
- arranging the ceiling modules (2) in a stretcher course, wherein a connection beam (2.1) of a first ceiling module (2) is preferably aligned with a connection beam (2) of a second ceiling module (2), and beveled ends of a first ceiling module (2) are aligned with beveled ends of a second ceiling module (2),
- merging the ceiling modules (2) together,
- connecting the ceiling modules (2) to a load bearing/transmitting structure (2.5),
- connecting the load bearing/transmitting structure (2.5) to a supporting structure (3).
